# EUROPEAN PATENT APPLICATION

(11) **EP 2 330 855 A1**
(43) Date of publication of application: **08.06.2011**
(21) Application number: 09814657.4
(22) Date of filing: 18.09.2009
(51) Int. Cl.: H04W 72/04, H04B 1/713, H04J 11/00

(54) **MOBILE TERMINAL DEVICE, BASE STATION DEVICE, AND COMMON CHANNEL SIGNAL TRANSMISSION METHOD**

(30) Priority: 22.09.2008 JP 2008243384
(71) Applicant: NTT DOCOMO, INC., Chiyoda-ku Tokyo 100-6150 (JP)
(72) Inventor: NAGATA, Satoshi, Tokyo 100-6150 (JP); MIKI, Nobuhiko, Tokyo 100-6150 (JP); KISHIYAMA, Yoshihisa, Tokyo 100-6150 (JP); SAWAHASHI, Mamoru, Tokyo 100-6150 (JP)
(74) Representative: HOFFMANN EITLE
(86) International application number: PCT/JP2009/066344
(87) International publication number: WO 2010/032813

(57) **Abstract**

In order to improve the reception quality of a shared channel signal transmitted on uplink or downlink, the present invention provides a mobile terminal apparatus that transmits a shared channel signal on uplink by using a predetermined number of basic frequency blocks out of a plurality of basic frequency blocks divided from a system band, each of the basic frequency blocks having a predetermined bandwidth. When receiving, on downlink, control information for frequency hopping of the shared channel signal over different basic frequency blocks, the mobile terminal apparatus maps the shared channel signal in sub-carriers in the different basic frequency blocks in such a manner that frequency hopping is performed over the basic frequency blocks in accordance with the control information, and radio-transmits a transmission signal after mapping to a base station apparatus.

## Description

### Technical Field

The present invention relates to a mobile terminal apparatus, a base station apparatus and a method for transmitting a shared channel signal, and particularly to a mobile terminal apparatus, a base station apparatus and a method for transmitting a shared channel signal, all using the next generation mobile communications technology.

### Background Art

In UMTS (Universal Mobile Telecommunications System) network, for the purpose of improving the frequency use efficiency and throughput performance, HSDPA (High Speed Downlink Packet Access) and HSUPA (High Speed Uplink Packet Access) have been adopted to draw the best out of the W-CDMA (Wideband Code Division Multiple Access) based system. As to this UMTS network, Long Term Evolution (LTE) has been considered to achieve higher throughput and lower delay (for example, see Non-Patent Literature1). In this LTE system, OFDMA (Orthogonal Frequency Division Multiple Access), which is different from W-CDMA, is used in the downlink and SC-FDMA (Single Carrier Frequency Division Multiple Access) is used in the uplink as the multiplexing system.

In the 3^{rd} generation system, which generally uses a fixed band of about 5 MHz, the transfer rate of 2 Mbps at the maximum can be realized in the downlink. On the other hand, in the LTE system, which uses a variable band of 1.4 MHz to 20 MHz, a maximum transfer rate of 75 Mbps can be achieved for the uplink and a maximum transfer rate of 300 Mbps can be achieved for the downlink. Besides, in the UMTS network, for the purpose of providing a much broader band and higher throughput, consideration has been made about a succeeding system to the LTE (for example, LTE Advanced (LTE-A)). For example, in the LTE-A, the maximum system band of 20 MHz specified in the LTE is planned to be extended to about 100 MHz.

### Citation List

### Non-Patent Literature

Non-Patent Literature 1: 3GPP, TR25.912 (V7.1.0), "Feasibility study for Evolved UTRA and UTRAN", Sep. 2006

### Summary of Invention

### Technical Problem

Here, in the LTE system, frequency hopping is applied in a Physical Downlink Shared Channel (PDSCH) and a Physical Uplink Shared Channel (PUSCH) which are used in transmission of a shared channel signal including user data. This frequency hopping makes it possible to achieve frequency diversity effects and thereby to improve the reception quality of the shared channel signal. Then, in the LTE-A system that provides a broader maximum system band than that of the LTE system as described above, there will be demands to make effective use of the broader system band and thereby to improve the reception quality of the shared channel signal.

### Solution to Problem

The present invention was carried out in view of such a situation and has an object to provide a mobile terminal apparatus, a base station apparatus and a method for transmitting a shared channel signal, all capable of improving reception quality of the shared channel signal transmitted on uplink or downlink.

One aspect of the present invention provides a mobile terminal apparatus which transmits a shared channel signal on uplink by using a predetermined number of basic frequency blocks out of a plurality of basic frequency blocks divided from a system band, each of the basic frequency blocks having a predetermined bandwidth, the mobile terminal apparatus comprising: a receiving section for receiving, on downlink, control information for frequency hopping of the shared channel signal over different basic frequency blocks; a mapping section for mapping the shared channel signal in sub-carriers in the different basic frequency blocks in such a manner that frequency hopping is performed over the basic frequency blocks in accordance with the control information; and a transmitting section for radio-transmitting a transmission signal after mapping to a base station apparatus.

According to this structure, as the shared channel signal is mapped in sub-carriers in different basic frequency blocks in such a manner that the frequency hopping is performed over the basic frequency blocks and the transmission signal after mapping is radio-transmitted to the base station apparatus, the transmission bands of the shared channels signal can be separated from each other, thereby achieving better frequency diversity effects and improving the reception quality of the shared channel signal transmitted on the uplink.

Another aspect of the present invention provides a base station apparatus that transmits a shared channel signal on downlink by using a predetermined number of basic frequency blocks out of a plurality of basic frequency blocks divided from a system band, each of the basic frequency blocks having a predetermined bandwidth, the base station apparatus comprising: a mapping section for mapping the shared channel signal in sub-carriers in the different basic frequency blocks in such a manner that frequency hopping is performed over the basic frequency blocks; and a transmitting section for radio-transmitting a transmission signal after mapping to a mobile terminal apparatus.

According to this structure, as the shared channel signal is mapped in sub-carriers in different basic frequency blocks in such a manner that the frequency hopping is performed over the basic frequency blocks and the transmission signal after mapping is radio-transmitted to the mobile terminal apparatus, the transmission bands of the shared channels signal can be separated from each other, thereby achieving better frequency diversity effects and improving the reception quality of the shared channel signal transmitted on the downlink.

### Technical Advantage of the Invention

According to the present invention, the shared channel signal is mapped in the sub-carriers in the different basic frequency blocks in such a manner that frequency hopping is performed in the different basic frequency blocks and the transmission signal aftermapping is radio-transmitted to the base station apparatus. With this structure, it becomes possible to separate the transmission bands of the shared channel signal separate from each other, thereby achieving excellent frequency diversity effects in uplink or downlink transmission and improving the reception quality of the shared channel signal.

### Brief Description of Drawings

Fig. 1 is a conceptual view of s system band used in mobile communications system according to an embodiment of the present invention;
Fig. 2 is a view for explaining a configuration of a shared data channel on uplink in the system band illustrated in Fig. 1;
Fig. 3 is a view for explaining a configuration of a shared data channel on downlink in the system band illustrated in Fig. 1;
Fig. 4 is a view for explaining a configuration of a mobile communications system having a mobile terminal apparatus and a base station apparatus according to the above-mentioned embodiment;
Fig. 5 is a functional block diagram of a transmitter and a receiver of the mobile terminal apparatus of the mobile communications system according to the above-mentioned embodiment;
Fig. 6 is a functional block diagram of a transmitter and a receiver of the base station apparatus of the mobile communications system according to the above-mentioned embodiment;
Fig. 7 is a view illustrating an example of a method for transmitting a shared channel signal on the uplink in the mobile communications system according to the above-mentioned embodiment;
Fig. 8 is a view illustrating another example of the method for transmitting a shared channel signal on the uplink in the mobile communications system according to the above-mentioned embodiment;
Fig. 9 is a view illustrating another example of the method for transmitting a shared channel signal on the uplink in the mobile communications system according to the above-mentioned embodiment;
Fig. 10 is a view illustrating an example of a method for transmitting a shared channel signal on the downlink in the mobile communications system according to the above-mentioned embodiment;
Fig. 11 is a view illustrating another example of the method for transmitting a shared channel signal on the downlink in the mobile communications system according to the above-mentioned embodiment;
Fig. 12 is a view illustrating another example of the method for transmitting a shared channel signal on the downlink in the mobile communications system according to the above-mentioned embodiment;
Fig. 13 is a view illustrating an example of the method for transmitting a shared channel signal on the uplink in the mobile communications system according to the above-mentioned embodiment;
Fig. 14 is a view illustrating an example of the method for transmitting a shared channel signal on the uplink in the mobile communications system according to the above-mentioned embodiment;
Fig. 15 is a view for explaining communications between the base station apparatus and the mobile terminal apparatus according to the above-mentioned embodiment when the mobile terminal apparatus performs frequency hopping in accordance with a predetermined hopping pattern;
Fig. 16 is a view illustrating a configuration example of a control signal in a PDCCH for instructions of frequency hopping;
Fig. 17 is a view for explaining communications between the base station apparatus and the mobile terminal apparatus according to the above-mentioned embodiment when the mobile terminal apparatus performs frequency hopping based on the instructions from the base station apparatus;
Fig. 18 is a view illustrating an example of a configuration of a control signal in PDCCH for instructions of frequency hopping; and
Figs. 19(a) and 19(b) are views each for explaining an example of the step of designating a resource block relating to frequency hopping in a hopping method flag in the control signal illustrated in Fig. 18.

### Description of Embodiments

With reference to the attached drawings, an embodiment of the present invention will be described in detail below. The following description is made by way of an example of a succeeding system to the LTE, that is, LTE-A (LTE Advance) system, however, this is not intended for limiting the present invention.

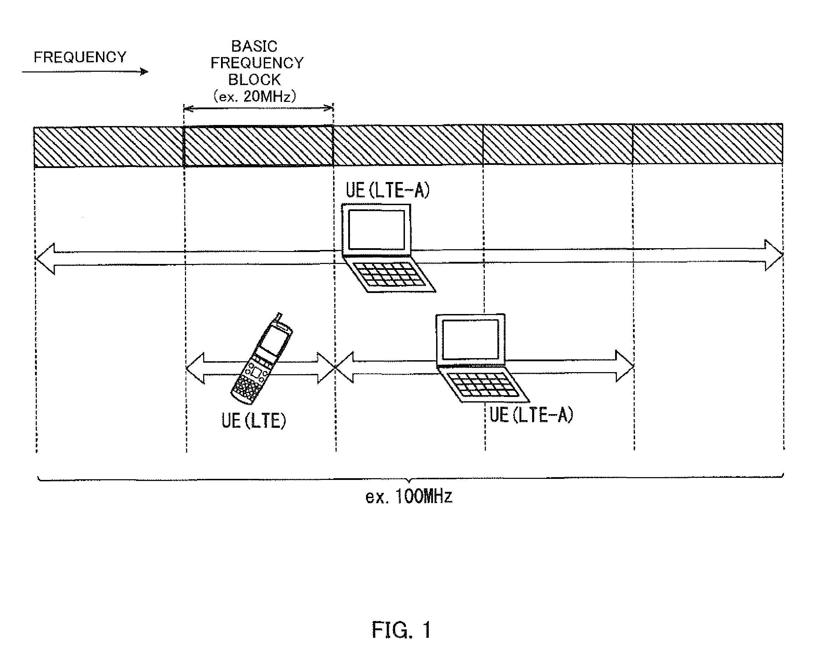

Fig. 1 is a conceptual view of a system band used in a mobile communications system according to one embodiment of the present invention. As illustrated in Fig. 1, the system band used in the mobile communications system is divided into basic frequency blocks. A whole transmission band of a base station apparatus that makes up the mobile communications system contains plural basic frequency blocks (five in this example). A bandwidth of each basic frequency block is preferably about 15 to 20 MHz for supporting LTD-capable UE (User Equipment). In the following description, it is assumed that the bandwidth of the basic frequency block is 20 MHz.

To each LTE-A-capable UE having capability of transmission/reception bandwidth broader than 20 MHz, a plurality of basic frequency blocks is allocated flexibly based on overhead of a control signal and frequency diversity gain. For example, to each LTE-A-capable UE having capability of transmission/reception bandwidth of 20 MHz, one basic frequency block is allocated. And, to each LTE-A-capable UE having capability of transmission/reception bandwidth of 40 MHz, two basic frequency blocks are allocated. Further, to each LTE-A-capable UE having capability of transmission/reception bandwidth of 100 MHz, five basic frequency blocks are allocated. Here, to each LTE-A-capable UE having capability of transmission/reception bandwidth broader than 20 MHz, for example, one basic frequency block of which bandwidth is equal to or less than its transmission/reception bandwidth may be allocated.

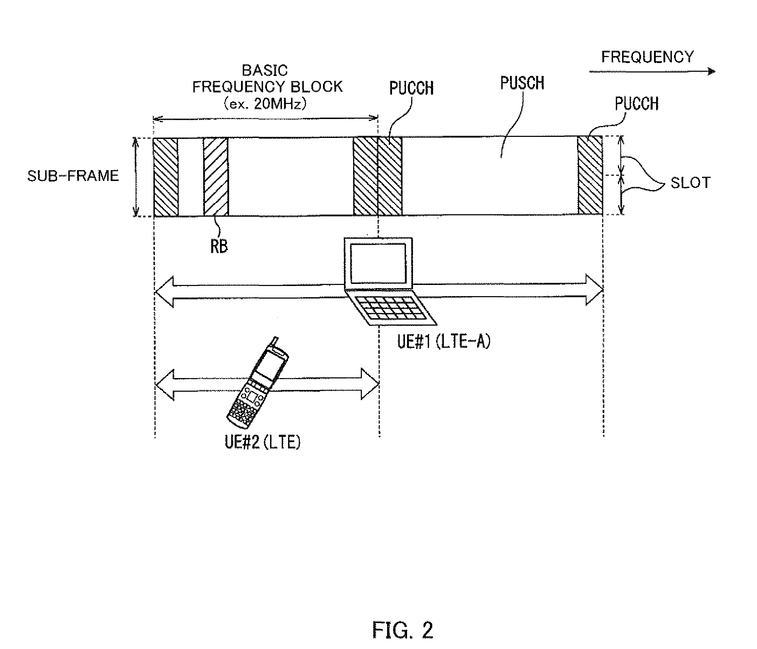

Fig. 2 is a view for explaining a configuration of a shared data channel on the uplink in the system band illustrated in Fig. 1. A basic frequency block includes a plurality of resource blocks (RB). Each RB consists of one or plural sub-carriers. As illustrated in Fig. 2, at both ends of the band including one or plural basic frequency blocks, Physical Uplink Control Channels (PUCCHs) used in transmission of control information are prepared, and a Physical Uplink Shared Channel (PUSCH) used in transmission of a shared channel signal is prepared between them. One band of RB is, for example, about 180 kHz and one band of PUCCH is also 180 kHz. For example, a predetermined number (for example, 10) of sub-frames each of 1 ms make up one radio frame. Besides, each sub-frame has two slots as section time.

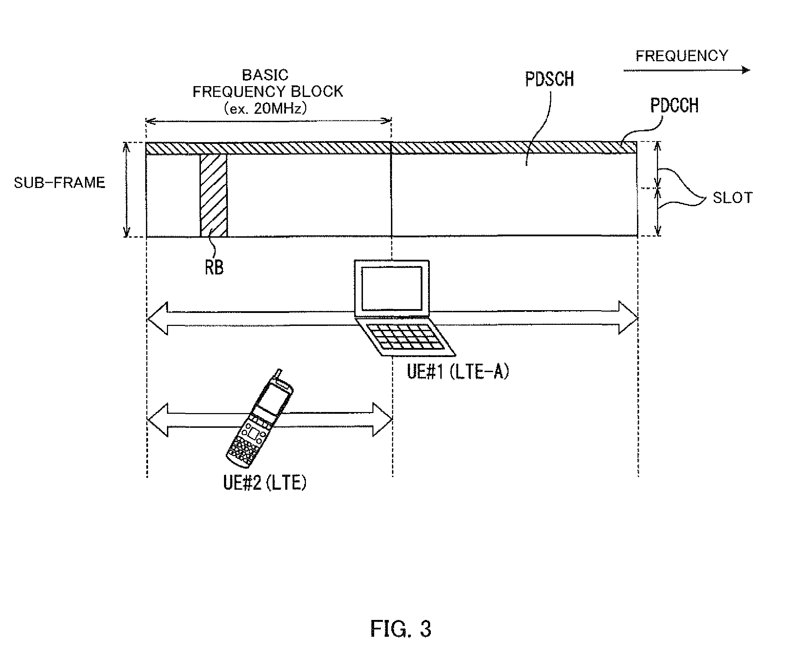

Fig. 3 is a view for explaining a configuration of a shared data channel on the downlink in the system band illustrated in Fig.1. Each basic frequency block contains a plurality of RBs like in the uplink. Each RB is made of one or plural sub-carriers. At the beginning of a sub-frame of 1 ms, a Physical Downlink Control Channel (PDCCH) used in transmission of control information is prepared, and a Physical Downlink Shared Channel (PDSCH) used in transmission of a shared channel signal is prepared to follow the PDCCH. For example, apredeterminednumber (for example, 10) of sub-frames of 1 ms form a radio frame like in the uplink and each sub-frame contains two slots as section time.

Here, the frequencies and numbers illustrated in the figures are given only by way of example and are not intended for limiting the present invention. In the examples of Figs. 2 and 3, an LTE-A-capable UR #1 to which two basic frequency blocks are allocated and an LTE-capable UE #2 to which one basic frequency block is allocated.

As described above, in the LTE system including the UE #2, in transmitting of a shared channel signal, frequency hopping (hereinafter referred to as "FH") is applied to the PDSCH and PUSCH for the purpose of achieving the frequency diversity effects. In this case, the frequency hopping is performed inside one basic frequency block corresponding to the maximum system band. Specifically there are performed two types of frequency hopping, that is, intra sub-frame FH with which frequency hopping is performed inside one sub-frame in the basic frequency block and inter sub-frame FH with which frequency hopping is performed over different sub-frames in the basic frequency block.

On the other hand, in the LTE-A system including the UE #1 and using a plurality of basic frequency blocks, it is preferably to perform frequency hopping over the plural basic frequency blocks in order to obtain better frequency diversity effects. Therefore, in the mobile communications system according to the present embodiment, in transmitting of a shared channel signal, frequency hopping is applied to shared data channels (PDSCH and PUSCH) in a plurality of basic frequency blocks. Specifically, a shared channel signal is mapped over sub-carriers in the basic frequency blocks to perform frequency hopping over plural basic frequency blocks. Here, a specific method of frequency hopping will be described later.

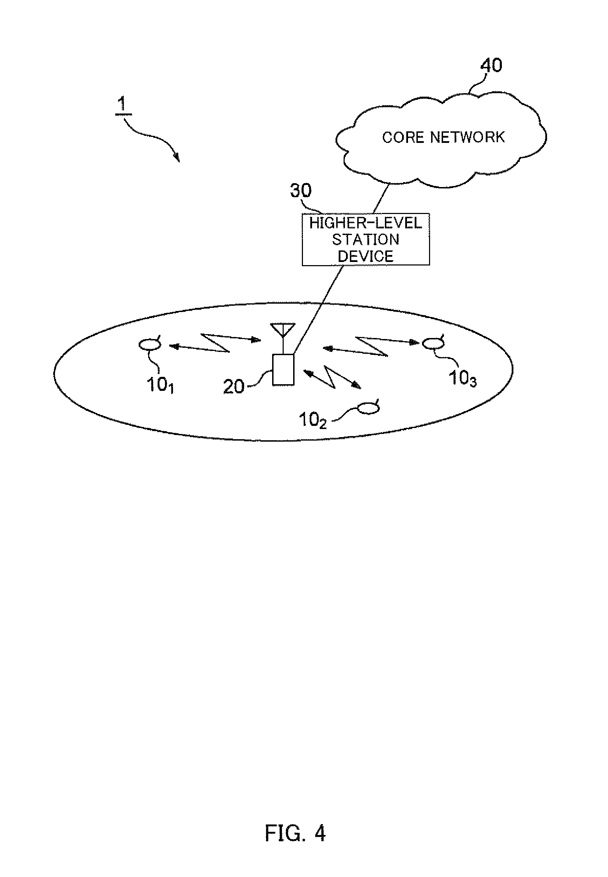

Here, description is made about the configuration of the mobile communications system having the mobile terminal apparatus and the base station apparatus according to the present embodiment. Fig. 4 is a view for explaining the configuration of the mobile communications system having the mobile terminal apparatus and the base station apparatus according to the present embodiment. The mobile communications system 1 illustrated in Fig. 1 is a system including SUPER 3G or Evolved UTRA and UTRAN (also called LTE: Long Term Evolution) . Or, this mobile communications system 1 may be called IMT-Advanced or 4G.

As illustrated in Fig. 4, the mobile communications system 1 is configured to have the base station apparatus 20 and mobile terminal apparatuss 10 (10₁, 10₂, 10₃, ..., 10ₙ, n: an integer greater than zero). The base station apparatus 20 is connected to a higher-level station apparatus 30, which is connected to a core network 40. For example, the higher-level station apparatus 30 includes, but is not limited to, an access gateway apparatus, a radio network controller (RNC), a mobility management entity (MME) and the like.

In the mobile communications system 1, for example, Evolved UTRA, OFDMA (Orthogonal Frequency Division Multiple Access) is included in the downlink and SC-FDMA (Single Carrier Frequency Division Multiple Access) is included in the uplink. OFDMA is a multi-carrier transmission system in which a frequency band is divided into plural narrower frequency bands (sub-carriers) and data is mapped on each sub-carrier for communications. SC-FDMA is a single carrier transmission system in which a frequency band is divided and allocated to the mobile terminal apparatuss 10 and the plural mobile terminal apparatuss 10 use different frequency bands from each other thereby to reduce interference between the mobile terminal apparatuss 10. Here, the multi-carrier transmission system may be used in the uplink. In such a case, for example, OFDMA, Clustered DFT Spread OFDM, N x SC-FDMA may be used in the uplink (see, for example, 3GPP, R11-082609, "Uplink Multiple access forLTE-Advanced", Aug. 2008).

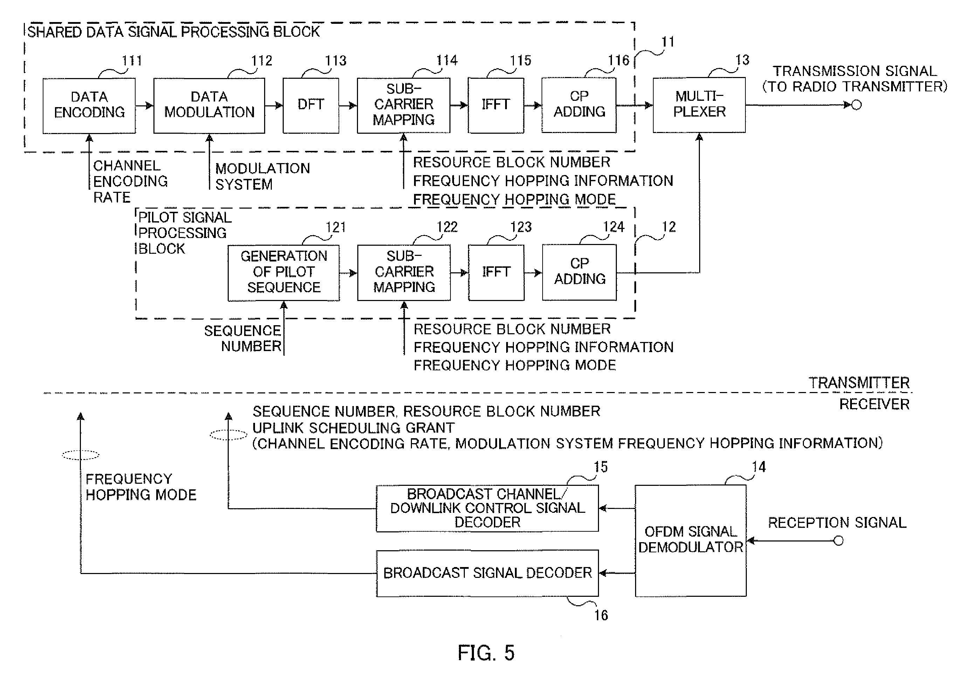

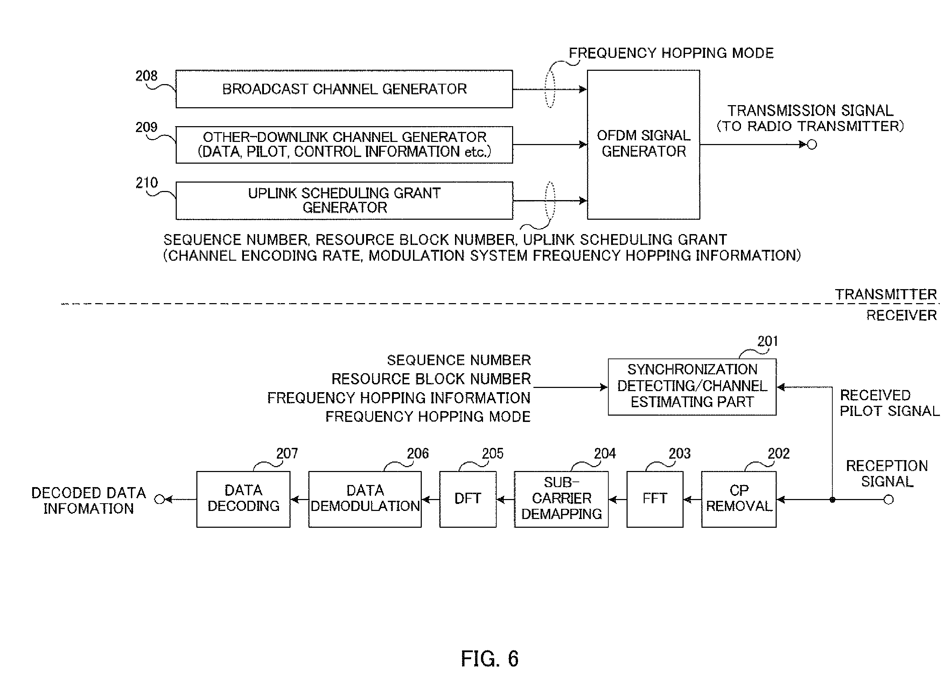

Here, description is made about the mobile terminal apparatus 10 and the base station apparatus 20 included in the mobile communications system 1. Fig. 5 is a functional block diagram of a transmitter and a receiver of the mobile terminal apparatus 10 of the mobile communications system 1 according to the present embodiment. Fig. 6 is a functional block diagram of a transmitter and a receiver of the base station apparatus 20 of the mobile communications system 1 according to the present embodiment. The configuration of the mobile terminal apparatus 10 in Fig. 5 and the configuration of the base station apparatus 20 in Fig. 6 are illustrated solely by way of example and not intended for limiting the present invention.

As illustrated in Fig. 5, the transmitter of the mobile terminal apparatus 10 has a processing block of a shared data signal (shared data signal processing block) 11, a processing block of a pilot signal (pilot signal processing block) 12 and a multiplexer 13. The shared data signal block 11 has a channel encoder 111, a data modulator 112, a DFT part 113, a sub-carrier mapping part 114, an Inverse Fast Fourier Transformer (IFFT) 115 and a guard interval adding part (CP) 116. The pilot signal processing block 12 has a pilot sequence generator 121, a sub-carrier mapping part 122, an Inverse Fast Fourier Transformer (IFFT) 123 and a guard interval adding part 124. The receiver of the mobile terminal apparatus 10 has an OFDM signal demodulator 14, a broadcast channel/downlink control signal decoder 15 and a broadcast signal decoder 16.

In the shared data signal processing block 11, the channel encoder 111 performs channel encoding on a shared data signal (shared channel signal) transmitted on the uplink at a predetermined channel encoding rate. The data modulator 112 performs data modulation on the shared channel signal by, for example, phase shift keying (BPSK, QPSK, 8PSK or the like) or quadrature amplitude modulation (QAM). The DFT part 113 performs discrete Fourier transform on the data-modulated shared channel signal. The sub-carrier mapping part 114 performs mapping of the shared channel signal on the sub-carriers based on frequency hopping information, frequency hopping mode and resource block number received on the downlink. The IFFT 115 performs Inverse Fast Fourier Transform on a signal containing the shared channel signal mapped on each sub-carrier. The guard interval adding part (CP) 116 adds a guard interval to the signal after IFFT. Here, the guard interval is prepared by the Cyclic Prefix (CP) system.

The pilot signal processing block 12 prepares a pilot channel to be transmitted on the uplink. In the pilot signal processing block 12, the pilot sequence generator 121 generates a code sequence indicating a pilot channel based on the code sequence number (sequence number) of the pilot channel used in communications. Here, the code sequence may be any code sequence suitable for the pilot channel. The sub-carrier mapping part 122 performs mapping of the pilot channel over appropriate sub-carriers based on the frequency hopping information, frequency hopping mode and resource block number received on the downlink. The IFFT 123 performs Inverse Fast Fourier Transform on a signal including the pilot channel mapped on each sub-carrier so that a frequency area signal is converted into a timeline area signal. The guard interval adding part (CP) 124 adds a guard interval to the signal after IFFT.

The multiplexer 13 multiplexes the shared data channel and the pilot channel. Multiplexing may be simple adding, or any of time division multiplexing, frequency division multiplexing and code division multiplexing. The transmission signal including a multiplexed signal is given to a radio transmitter (not shown) and finally radio-transmitted to the base station apparatus 20 on the uplink.

The OFDM signal demodulator 14 demodulates a reception signal modulated by the OFDM system and extracts a baseband signal. For example, the OFDM signal demodulator 14 performs processing such as removal of guard interval, Fourier transform, sub-carrier demapping and data demodulation on the reception signal and extracts the downlink pilot channel, broadcast channel and/or downlink control channel, downlink data channel and the like. With this OFDM signal demodulator 14, for example, in the base station apparatus 20, the shared channel signal that is mapped on the sub-carriers in the basic frequency blocks so as to perform frequency hopping over different basic frequency blocks is subjected to demapping.

The broadcast channel/downlink control signal decoder 15 decodes the broadcast channel or downlink control signal received on the downlink to obtain a sequence number, a resource block number and an uplink scheduling grant. Here, the uplink scheduling grant includes, for example, a channel encoding rate, a modulation system and frequency hopping information. And, the sequence number, the channel encoding rate and modulation system are given to the pilot sequence generator 121, the channel encoder 111 and the data modulator 112, respectively, and the resource block number and the frequency hopping information are given to the sub-carrier mapping part 114 and the sub-carrier mapping part 122. Here, this broadcast channel/downlink control signal decoder 15 functions as a part of receiving section for receiving control information on frequency hopping from the base station apparatus 20.

The broadcast signal decoder 16 decodes a broadcast signal received on the downlink and obtains a frequency hopping mode. Then, the frequency hopping mode is given to the sub-carrier mapping part 114 and the sub-carrier mapping part 122. Here, this broadcast signal decoder 16 functions as a part of receiving section for receiving control information on frequency hopping from the base station apparatus 20.

On the other hand, the receiver of the base station apparatus 20 has a synchronization detecting/channel estimating part 201, a guard interval remover 202, a Fast Fourier Transformer (FFT) 203, a sub-carrier demapping part 204, a DFT part 205, a data demodulator 206 and a data decoder 207. And, the transmitter of the base station apparatus 20 has a broadcast channel generator 208, an other-downlink channel generator 209, an uplink scheduling grant generator 210 and an OFDM signal generator 211.

The synchronization detecting/channel estimating part 201 performs synchronization establishment and channel estimation based on the pilot channel received on the uplink, the sequence number generated by the transmitter, the resource block number, frequency hopping information and frequency hopping mode. The guard interval remover 202 removes the guard interval from the reception signal in accordance with synchronization timing of the reception signal. The FFT 203 performs Fast Fourier Transform on the reception signal so that the timeline area signal is converted into a frequency area signal. The sub-carrier demapping part 204 extracts a signal mapped on each sub-carrier based on the frequency hopping information frequency hopping mode and resource block number generated by the transmitter. This signal includes, for example, a control channel and a data channel. The DFT part 205 performs discrete Fourier Transform on the signal extracted by the sub-carrier demapping part 204. The data demodulator 206 performs data modulation on the received signal. The data decoder 207 performs data decoding on the data-demodulated signal. Here, the control channel and data channel are subjected to data demodulation and data decoding, independently, but shown as combined for simple illustration.

The broadcast channel generator 208 generates a broadcast channel. For example, the broadcast channel includes the frequency hopping mode used in the mobile terminal apparatus 10. The other downlink channel generator 209 generates a downlink signal other than the broadcast channel and scheduling information (a data channel, a pilot channel, a synchronization channel, another control channel and the like). The uplink scheduling grant generator 210 generates control information indicating scheduling information for granting transmission of a data channel on the uplink. Here, the scheduling information includes a sequence number, use-granted resource block number and uplink scheduling grant. For example, the uplink scheduling grant includes a channel encoding rate, a modulation system and frequency hopping information. Here, this frequency hopping information includes, for example, presence or absence of frequency hopping, as described later, and resource block relating to the frequency hopping. The OFDM signal generator 211 modulates the signal including various information of the downlink by the OFDM system and generates a downlink transmission signal. For example, the OFDM signal generator 211 performs processing such as channel encoding, data modulation, sub-carrier mapping, IFFT and addition of a guard interval. The downlink transmission signal is given to a radio transmitter (not shown) and finally radio-transmitted to the mobile terminal apparatus 10 on the downlink.

Here, the above-described frequency hopping mode and frequency hopping information form a part of control information, for example, forperformingfrequencyhopping of a shared channel signal between different basic frequency blocks in the mobile terminal apparatus 10. The broadcast channel generator 208 and the uplink scheduling grant generator 210 function as mapping determining section for determining mapping details for control information on the frequency hopping. For example, this mapping determining section determines mapping details for control information for frequency hopping in first to third transmission methods described later. As such control information on frequency hopping is given from the base station apparatus 20 to the mobile terminal apparatus 10, it becomes possible to perform, in the mobile terminal apparatus 10 that has received such control information, the frequency hopping appropriately of a shared channel signal in plural basic frequency blocks.

In the mobile communications system 1 according to the present embodiment, when a shared channel signal is transmitted between the mobile terminal apparatus 10 and the base station apparatus 20 of such structures, frequency hopping is applied to the shared data channels in plural basic frequency blocks. The following description is made about transmission methods of shared channels signals in the mobile communications system 1 according to the present embodiment. In the following description, it is assumed that two basic frequency blocks are used by one mobile terminal apparatus 10 (UE), however, three or more basic frequency blocks may be used by one mobile terminal apparatus 10. Further, the following description is made about some transmission methods, which are presented solely by way of example and not inclusive. The first to third transmission methods described below relate to the uplink and the fourth to sixth transmission methods described below relate to the downlink.

### (FIRST TRANSMISSION METHOD)

In the first transmission method, single carrier transmission or multi carrier transmission is used as transmission of a shared channel signal, and intra sub-frame FH is applied in a basic frequency block and inter sub-frame FH is applied between the basic frequency blocks. That is, in the first transmission method, frequency hopping is performed between basic frequency blocks in different sub-frames and frequency hopping is performed between different band slots in a sub-frame.

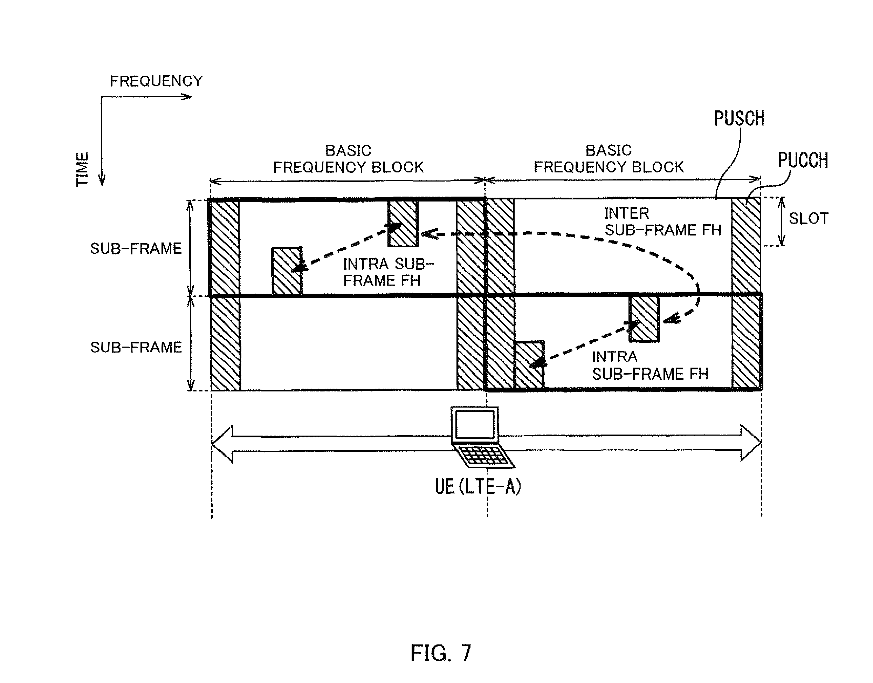

In this transmission method, as illustrated in Fig. 7, in transmission of the shared channel signal transmitted from the mobile terminal apparatus 10 to the base station apparatus 20, the band of the basic frequency block used in transmission of the shared channel signal in the former sub-frame is different, in continuous sub-frames, from the band of the basic frequency block used in transmission of the shared channel signal in the latter sub-frame. Further, in each basic frequency block, transmission of the shared channel signal is performed continuously in two resource block slots, but the band of the first slot and the band of the following slot are different from each other.

According to this transmission method, as inter sub-frame FH is performed over plural different basic frequency blocks, the bands used in transmission of the shared channel signal are separated from each other, thereby achieving better frequency diversity effects than that in the LTE system and improving the reception quality of the shared channel signal. Further, when single carrier transmission is used in transmission of the shared channel signal, PAPR can be suppressed to be as low as that in the LTE system. Furthermore, as control is made in each basic frequency block, it is possible to have compatibility with the LTE system without need to prepare any special processing in the LTE system.

### (SECOND TRANSMISSION METHOD)

In the second transmission method, single carrier transmission or multi carrier transmission is used in transmission of a shared channel signal, and intra sub-frame FH is applied between basic frequency blocks. That is, in the second transmission method, frequency hopping is performed between different basic frequency blocks in one sub-frame.

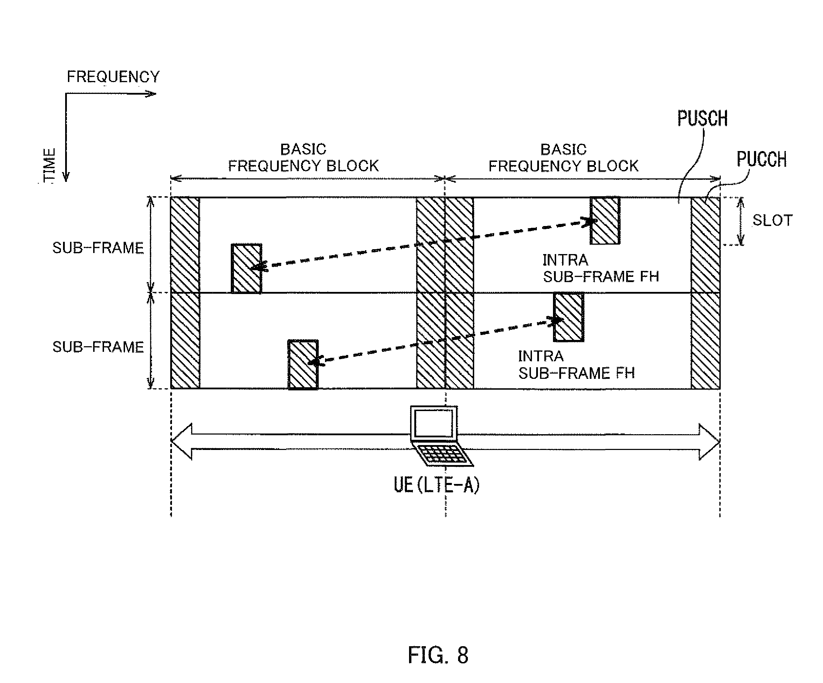

In this transmission method, as illustrated in Fig. 8, transmission of a shared channel signal transmitted from the mobile terminal apparatus 10 to the base station apparatus 20 is performed in one sub-frame by way of plural different basic frequency blocks. Here, two basic frequency blocks are used, however, the same goes for the case using three or more basic frequency blocks. In the two basic frequency blocks, transmission of the shared channel signal is performed continuously in two resource block slots. In this case, it is preferable that the bands of these slots are separated from each other as much as possible in order to achieve better frequency diversity effects.

According to this transmission method, as intra sub-frame FH is performed over plural different basic frequency blocks, it is possible to separate the bands used in transmission of the shared channel signal from each other, thereby achieving better frequency diversity effects than that in the LTE system and improving the reception quality of the shared channel signal. Further, when the single carrier transmission is used in transmission of the shared channel signal, the PAPR can be suppressed to be as low as that in the LTE system.

### (THIRD TRANSMISSION METHOD)

In the third transmission method, multi carrier transmission is used in transmission of a shared channel, the shared channel signal is transmitted from plural basic frequency blocks and intra sub-frame FH is applied in each of the basic frequency blocks. That is, in the third transmission method, frequency hopping of the shared channel signal is performed over different band slots included in the sub-frame in each of plural basic frequency blocks.

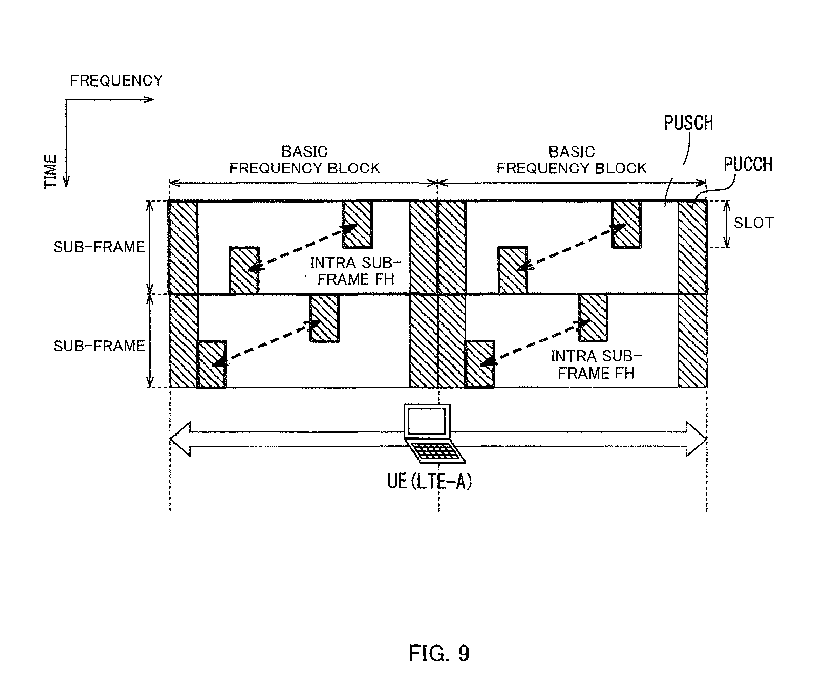

In this transmission method, as illustrated in Fig. 9, transmission of the shared channel signal transmitted from the mobile terminal apparatus 10 to the base station apparatus 20 is performed over plural different basic frequency blocks in one sub-frame. Here, two basic frequency blocks are used, but the same goes for the case using three or more basic frequency blocks. The multi carrier transmission is applied and the shared channel signal is transmitted simultaneously in the same resource block slots in the respective basic frequency blocks. Further, in each basic frequency block, transmission of the shared channel signal is performed continuously in the two resource block slots, however, the first slot band and the next slot band are different from each other.

According to this method, as multi carrier transmission over plural different basic frequency blocks is used, the shared channel signal is transmitted in a certain slot and by plural bands. Therefore, the signals are combined at the base station apparatus 20 side thereby improving the reception quality of the shared channel signal.

### (FOURTH TRANSMISSION METHOD)

The fourth transmission method is a transmission method of a shared channel signal on the downlink corresponding to the first transmission method. In the fourth transmission method, single carrier transmission is used in transmission of the shared channel signal, intra sub-frame FH is applied in a basic frequency block and inter sub-frame FH is applied between basic frequency blocks. That is, in the fourth transmission method, the frequency hopping is performed over different basic frequency blocks in different sub-frames.

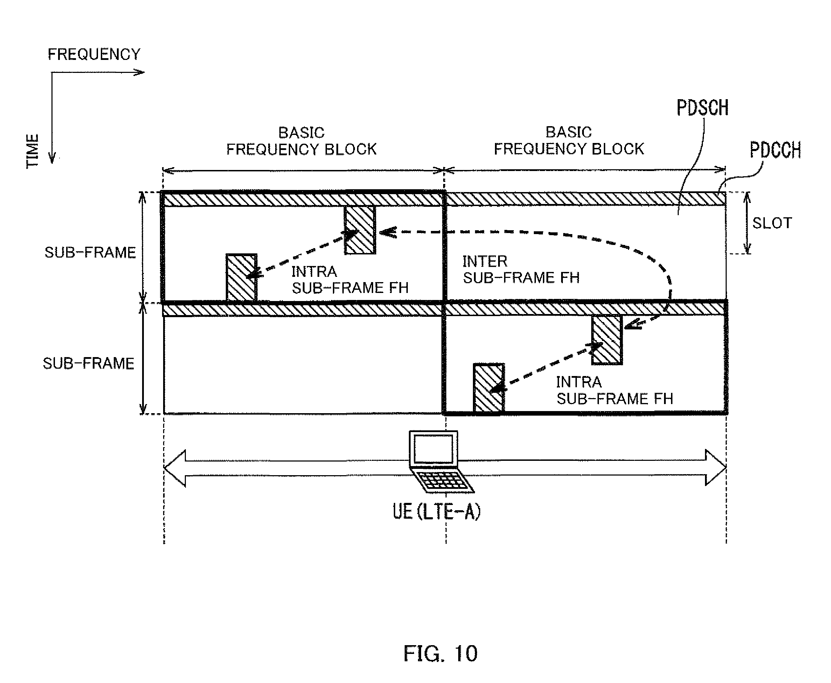

In this transmission method, as illustrated in Fig. 10, in transmission of the shared channel signal transmitted from the base station apparatus 20 to the mobile terminal apparatus 10, the band of the basic frequency block used in transmission of the shared channel signal in the former sub-frame is different, in continuous sub-frames, from the band of the basic frequency block used in transmission of the shared channel signal in the latter sub-frame. Further, in each basic frequency block, transmission of the shared channel signal is performed continuously in two resource block slots, but the band of the first slot and the band of the following slot are different from each other.

According to this transmission method, as inter sub-frame FH is performed over plural different basic frequency blocks, the bands used in transmission of the shared channel signal are separated from each other, thereby achieving better frequency diversity effects than that in the LTE system and improving the reception quality of the shared channel signal. Further, as control is made in each basic frequency block, it is possible to have compatibility with the LTE system without need to prepare any special processing in the LTE system.

### (FIFTH TRANSMISSION METHOD)

The fifth transmission method is a transmission method of a shared channel signal on the downlink corresponding to the second transmission method. In the fifth transmission method, single carrier transmission is used in transmission of the shared channel signal and intra sub-frame FH is applied between the basic frequency blocks. That is, in the fifth transmission method, frequency hopping is performed over different basic frequency blocks in one sub-frame.

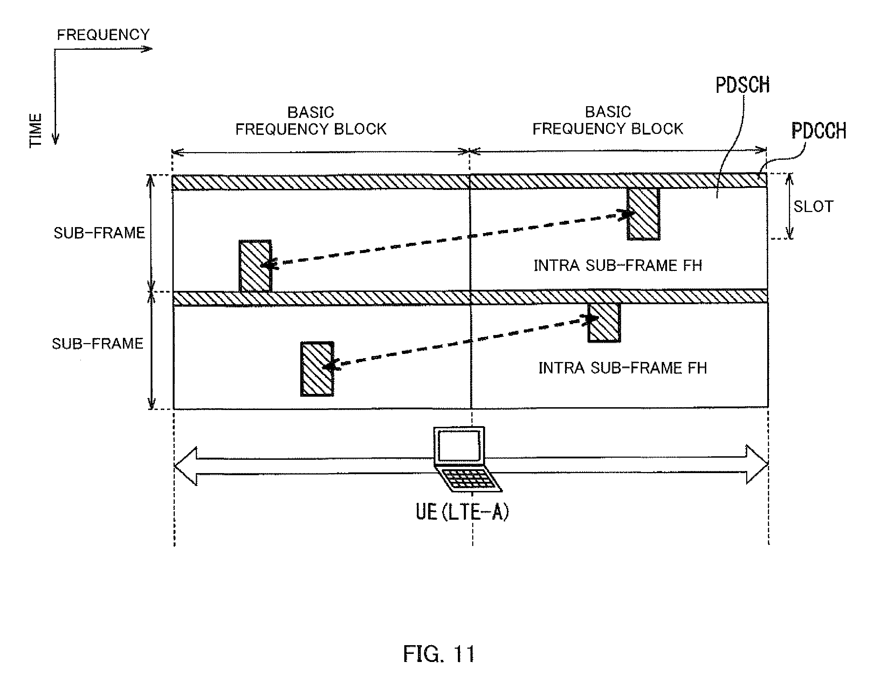

In this transmission method, as illustrated in Fig. 11, transmission of a shared channel signal transmitted from the base station apparatus 20 to the mobile terminal apparatus 10 is performed in one sub-frame by way of plural different basic frequency blocks. Here, two basic frequency blocks are used, however, the same goes for the case using three or more basic frequency blocks. In the two basic frequency blocks, transmission of the shared channel signal is performed continuously in two resource block slots. In this case, it is preferable that the bands of these slots are separated from each other as much as possible in order to achieve better frequency diversity effects.

According to this transmission method, as intra sub-frame FH is performed over plural different basic frequency blocks, it is possible to separate the bands used in transmission of the shared channel signal from each other, thereby achieving better frequency diversity effects than that in the LTE system and improving the reception quality of the shared channel signal.

### (SIXTH TRANSMISSION METHOD)

The sixth transmission method is a transmission method of a shared channel signal on the downlink corresponding to the third transmission method. In the sixth transmission method, multi carrier transmission is used in transmission of the shared channel signal and the signal is transmitted from plural basic frequency blocks and intra sub-frame FH is applied in each of the basic frequency blocks. That is, in the sixth transmission method, frequency hopping is performed between different band slots included in a sub-frame in the plural basic frequency blocks.

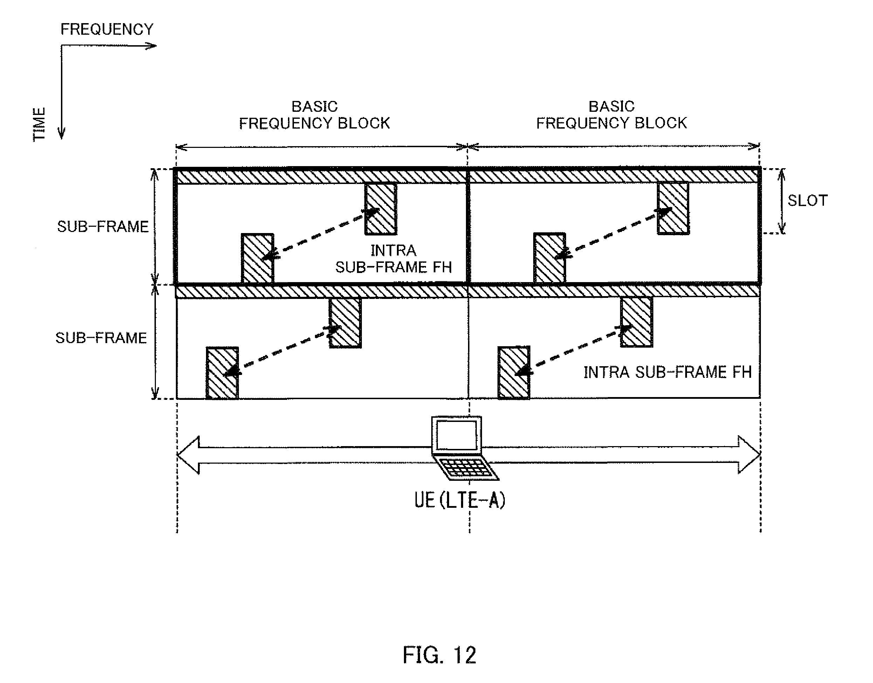

In this transmission method, as illustrated in Fig. 12, transmission of the shared channel signal transmitted from the base station apparatus 20 to the mobile terminal apparatus 10 is performed over plural different basic frequency blocks in one sub-frame. Here, two basic frequency blocks are used, but the same goes for the case using three or more basic frequency blocks. The multi carrier transmission is applied and the shared channel signal is transmitted simultaneously in the same resource block slots in the respective basic frequency blocks. Further, in each basic frequency block, transmission of the shared channel signal is performed continuously in the two resource block slots, however, the first slot band and the next slot band are different from each other.

According to this method, as multi carrier transmission over plural different basic frequency blocks is used, the shared channel signal is transmitted in a certain slot and by plural bands. Therefore, the signals are combined at the mobile terminal apparatus 10 side thereby improving the reception quality of the shared channel signal.

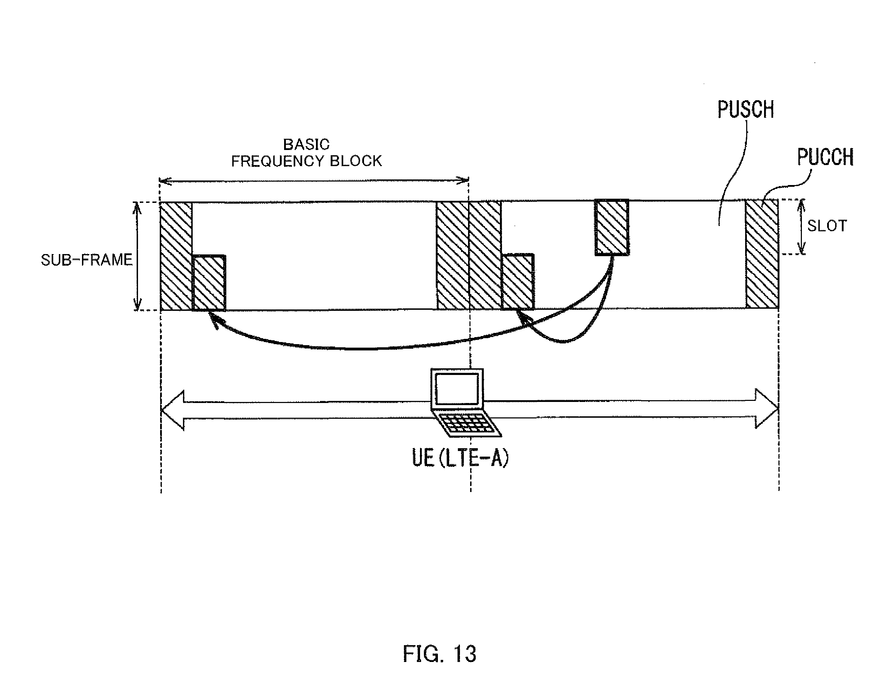

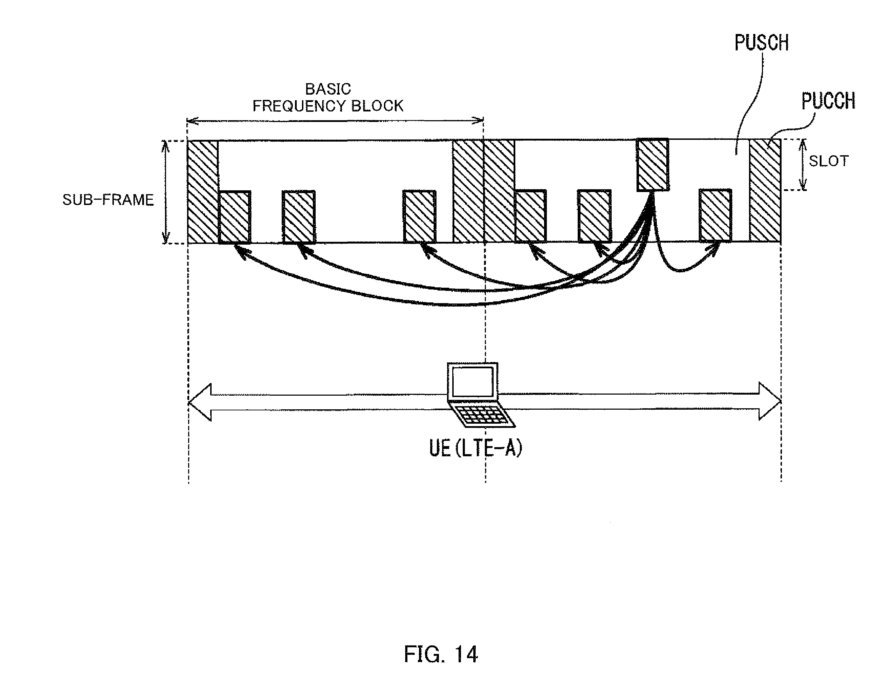

Here, in these first to sixth transmission methods, for example, a shared channel signal transmitted via different basic frequency blocks may be resent data. Further, in intra sub-frame FH in the same sub-frame, as illustrated in Figs. 13 and 14, plural later slots in the sub-frame may be used to transmit the shared channel signal. Fig. 13 illustrates the case where the two latter slots are used in different two basic frequency blocks in the sub-frame. Fig. 14 illustrates the case where six latter slots are used in the different two basic frequency blocks in the sub-frame. Like in these case, when plural latter slots are used in the sub-frame to transmit shared channel signals, these are subjected to combining processing or the like at the reception side apparatus, thereby enabling improvement of the reception quality of the shared channel signals.

Here, when the shared channel signal is transmitted in accordance with the above-mentioned first to sixth transmission methods, it is necessary to specify the presence or absence of frequency hopping and the frequency hopping method. These presence or absence of frequency hopping and the frequency hopping method may be specified by the base station apparatus 20, for example, in consideration of communications environments or the like of the mobile terminal apparatus 10 as a communications target. These may be specified by another apparatus such as the higher-level apparatus 30. The frequency hopping method includes, for example, a mode of the frequency hopping (frequency hopping mode) and resource blocks relating to the frequency hopping (resource blocks before and after the frequency hopping). Here, the frequency hopping mode includes, for example, types of the frequency hopping used in the above-mentioned first to sixth transmission methods. Besides, the resource blocks relating to the frequency hopping are specified, for example, by a predetermine frequency hopping pattern (hereinafter referred to as "predetermined hopping pattern") and based on the instructions of the base station apparatus 20, but are not limited thereto.

The following description is made about a specific example of specifying the presence or absence of frequency hopping and the frequency hopping method in transmitting of a shared channel signal in the mobile communications system 1 according to the present embodiment. Here, it is assumed that the mobile terminal apparatus 10 performs frequency hopping based on instructions of the base station apparatus 20 and a predetermined hopping pattern.

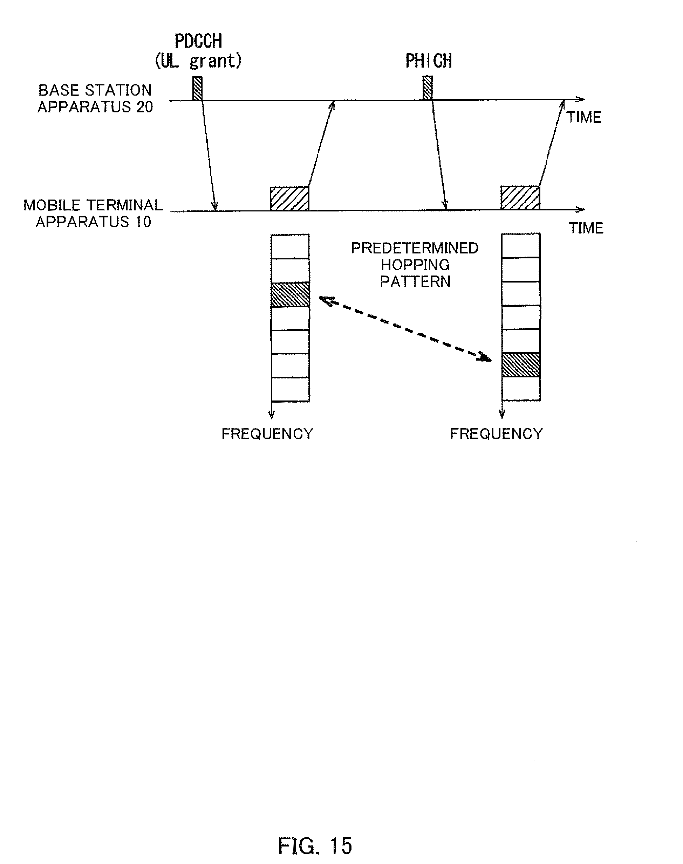

Fig. 15 is a view for explaining communications between the mobile terminal apparatus 10 and the base station apparatus 20 when the mobile terminal apparatus 10 performs frequency hopping in accordance with a predetermined hoping pattern. In this case, in the mobile terminal apparatus 10, the predetermined hopping pattern is held by prior communications with the base station apparatus 20. As illustrated in Fig. 15, instructions of frequency hopping to the mobile terminal apparatus 10 are given from the base station apparatus 20 to the mobile terminal apparatus 10 by a control signal on the PDCCH.

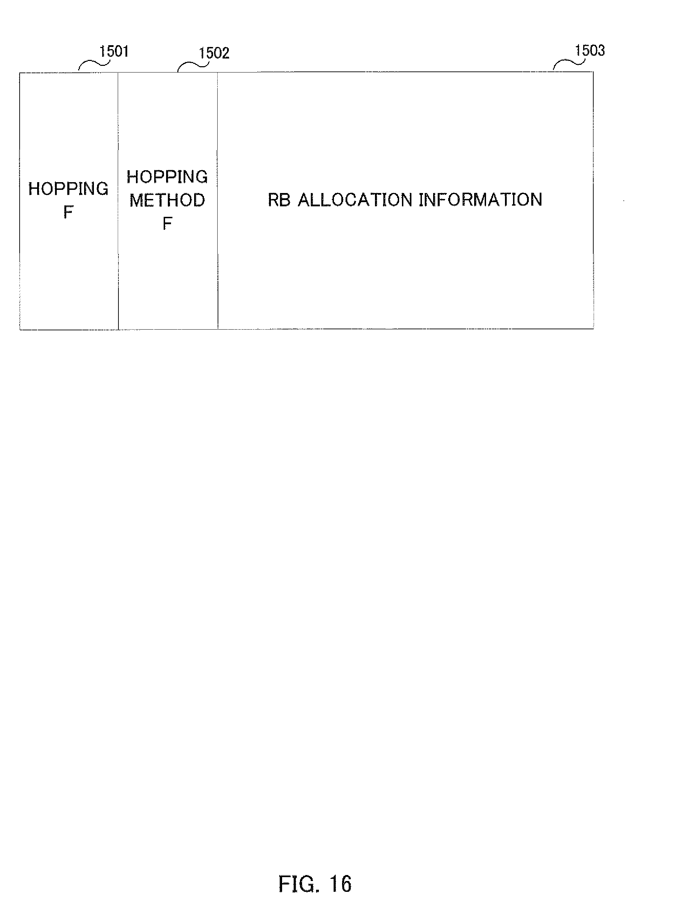

Fig. 16 is a view illustrating a configuration example of the control signal on the PDCCH for the instructions of frequency hopping. The control signal illustrated in Fig. 16 contains, for example, a hopping flag 1501 for specifying the presence or absence of the frequency hopping, a hopping method flag 1502 for specifying the method of the frequency hopping and resource block allocation information 1503. In this case, in the hopping method flag 1502, for example, the frequency hopping type used in any of the first to third transmission methods is specified.

When receiving such a control signal (control signal containing the hopping flag 1501 to perform the frequency hopping), the mobile terminal apparatus 10 allocates the shared channel signal to a resource block of PUSCH in accordance with the predetermined hopping pattern and transmits it to the base station apparatus 20. Then, receiving a PHICH (Physical Hybrid ARQ Indicator Channel) from the base station apparatus 20, the mobile terminal apparatus 10 allocates the shared channel signal to the resource block of PUSCH in accordance with the predetermined hopping pattern again and transmits it to the base station apparatus 20. In this way, frequency hopping is performed in the mobile terminal apparatus 10 based on the predetermined hopping pattern and in accordance with any of the above-described first to third transmission methods.

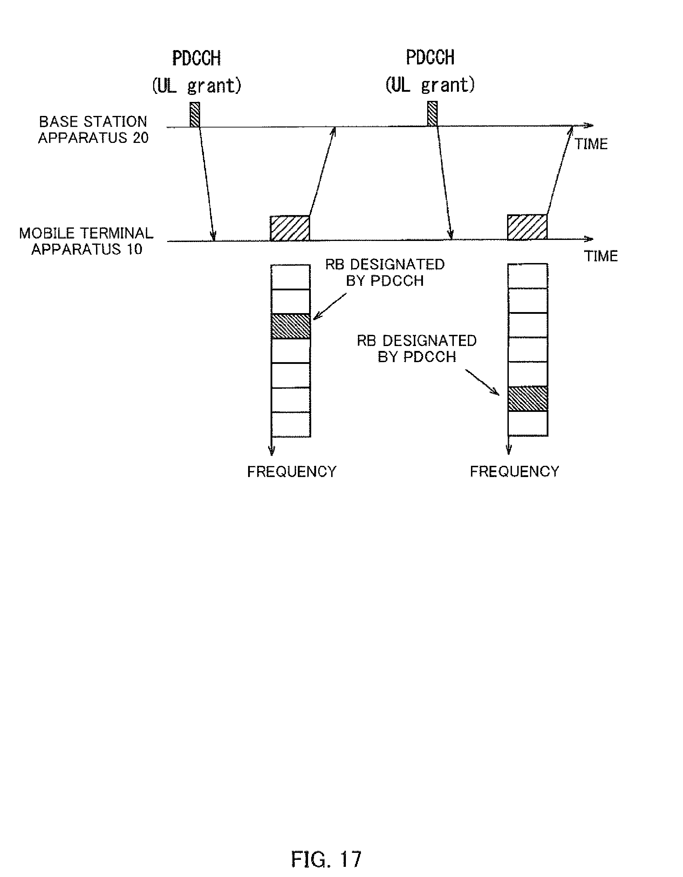

Fig. 17 is a view for explaining communications between the mobile terminal apparatus 10 and the base station deice 20 when the mobile terminal apparatus 10 performs frequency hopping based on instructions from the base station apparatus 20. Here, description is made assuming that the frequency hopping is performed based on the instructions from the base station apparatus 20 in accordance with the above-mentioned, predetermined hopping pattern, however, this is not intended for limiting the present invention. In this case, at the mobile terminal apparatus 10, the predetermined hopping pattern is held by prior communications with the base station apparatus 20. As illustrated in Fig. 17, the instructions of frequency hopping to the mobile terminal apparatus 10 are given from the base station apparatus 20 to the mobile terminal apparatus 10 by a control signal on PDCCH.

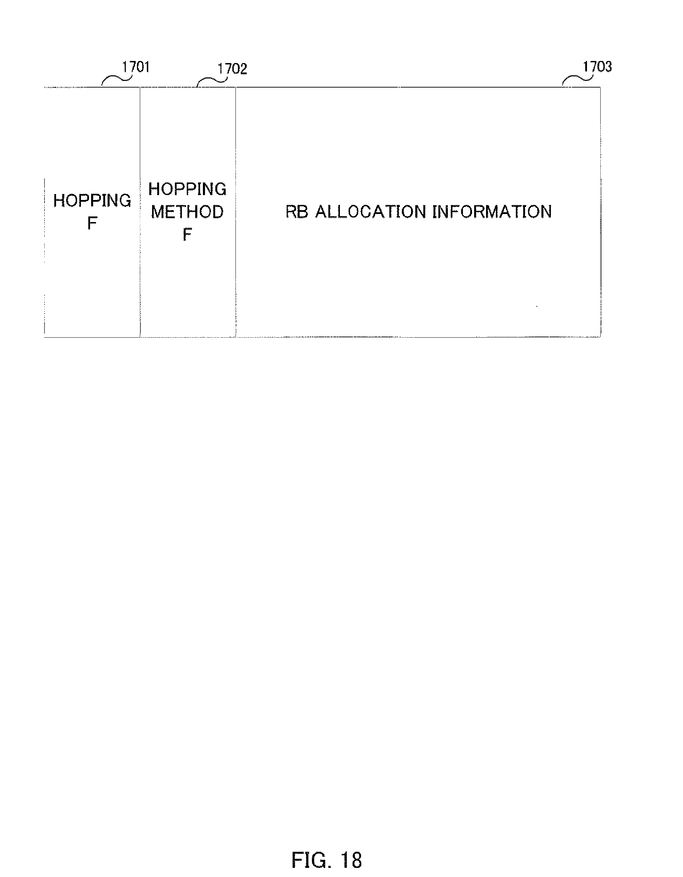

Fig. 18 is a view illustrating a configuration example of the control signal on PDCCH for the instructions of frequency hopping. For example, the control signal illustrated in Fig. 18 contains a hopping flag 1701 for specifying the presence or absence of the frequency hopping, a hopping method flag 1702 for specifying the frequency hopping method and resource block allocation information 1703. In this case, in the hopping method flag 1702, for example, the type of frequency hopping used in any of the above-mentioned first to third transmission methods and resource blocks relating to the frequency hopping are specified. The description is made about the case when such a control signal is transmission on the PDCCH, however, this is not intended for limiting the present invention. The signal may be transmitted as a higher layer signaling.

When receiving such a control signal (control signal containing the hopping flag 1701 to perform the frequency hopping), the mobile terminal apparatus 10 allocates the shared channel signal to a resource block of PUSCH instructed by the PDCCH and transmits it to the base station apparatus 20. Then, receiving the abode-mentioned control signal from the base station apparatus 20, the mobile terminal apparatus 10 allocates the shared channel signal, to the resource block of PUSCH instructed by this PDCCH again and transmits it to the base station apparatus 20. In this way, frequency hopping is performed in the mobile terminal apparatus 10 based on the instructions from the base station apparatus 20 and in accordance with any of the above-described first to third transmission methods.

Here, description is made assuming that the mobile terminal apparatus 10 performs frequency hopping in accordance with any of the above-mentioned first to third transmission methods based on the predetermined hopping pattern and the instructions of the base station apparatus 20. When the base station apparatus 20 performs frequency hopping, as is the case with the mobile terminal apparatus 10, the frequency hopping can be performed in accordance with any of the above-mentioned fourth to sixth transmission methods and based on the predetermined hopping pattern and the decision of the base station apparatus 20 itself.

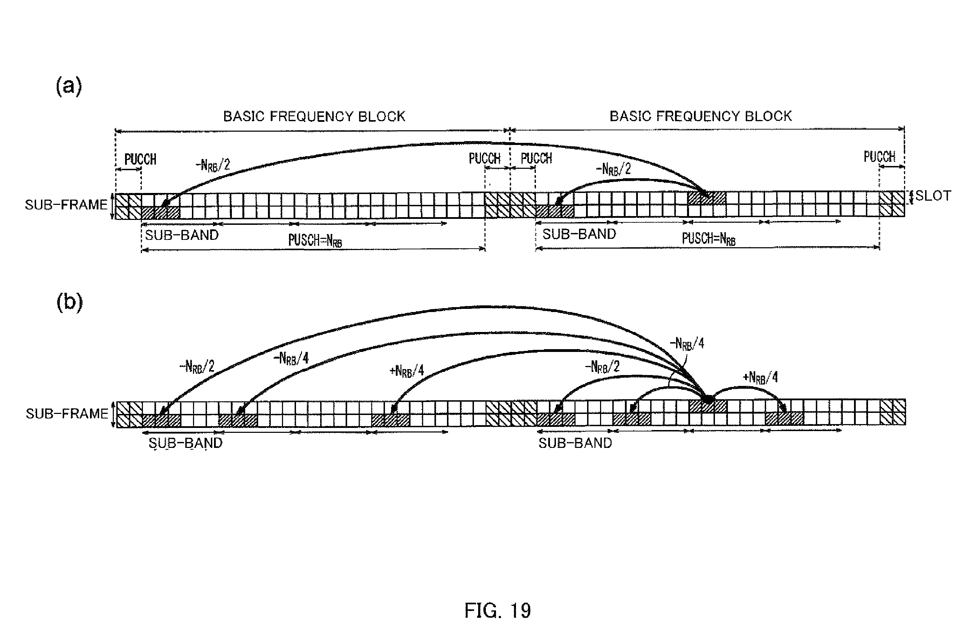

Here, description is made about an example of specifying resource blocks relating to the frequency hopping in the hopping method flag 1702 in the control signal illustrated in Fig. 18. Fig. 19 is a view for explaining an example of specifying resource blocks relating to the frequency hopping in the hopping method flag 1702 in the control signal illustrated in Fig. 18. In Fig. 19, it is assumed that s resource block after hopping is specified as shifted by a predetermined number of resource blocks from a resource block before the hopping. Here, in Fig. 19, it is also assumed that the PUSCH is made up of N resource blocks (RBs). Besides, the resource block of the first slot in the sub-frame is, for example, a resource block specified on the preceding PDCCH illustrated in Fig. 17.

Fig. 19(a) illustrates the case of specifying a resource block after hopping by the hopping method flag 1702 made of two bits. In this case, for example, when, out of the two bits, one bit is for specifying the resource block after hopping in the basic frequency block and is set to "0", the resource block after hopping is specified N_{RB}/2 shifted to the low frequency side, that is, a half of the whole resource block (N_{RB}). When the bit is set to "1", such instructions can be given that the frequency hopping is performed in accordance with the predetermined hopping pattern. Besides, for example, out of the above-mentioned two bits, when one bit for specifying a basic frequency block after hopping is set to "0", the basic frequency block after hopping is specified to an adjacent basic frequency block at the low frequency side, and when it is set to "1", the basic frequency block after hopping is specified to as an adjacent basic frequency block at the high frequency side. Fig 19(a) illustrates the adjacent basic frequency block at the low frequency side specified as the basic frequency block after hopping.

Fig. 19 (b) illustrates the case of specifying a resource block after hopping by the hopping method flag 1702 made of three bits. In this case, for example, when, out of the three bits, two bits are for specifying the resource block after hopping in the basic frequency block and are set to "00", the resource block after hopping is specified N_{RB}/4 shifted to the low frequency side, that is, one quarter of the whole resource block (N_{RB}). When the bits are set to "01", the resource blocks after hopping is specified N_{RB}/4 shifted to the high frequency side. When the bits are set to "10", the resource blocks after hopping is specified N_{RB}/2 shifted to the low frequency side and when the bits are set to "11.", such instructions can be given that the frequency hopping is performed in accordance with the predetermined hopping pattern. Besides, for example, out of the above-mentioned three bits, when one bit for specifying a basic frequency block after hopping is set to "0", the basic frequency block after hopping is specified to an adjacent basic frequency block at the low frequency side, and when it is set to "1", the basic frequency block after hopping is specified to as an adjacent basic frequency block at the high frequency side. Fig 19 (b) illustrates the adjacent basic frequency block at the low frequency side specified as the basic frequency block after hopping.

In this way, the resource block after hopping in the above-mentioned first to third transmission methods can be instructed by adjusting the instructions in the hopping method flag 1702 in the control signal illustrated in Fig. 18. For example, it is possible to specify the resource block after hopping when the inter sub-frame FH is performed over the basic frequency blocks in the first transmission method and when the intra sub-frame FH is performed between the basic frequency blocks in the second transmission method. Here, the contents for specifying the resource block after hopping in the basic frequency block illustrated in Fig. 19 are presented solely by way of example and may be appropriately modified and realized.

In this way, in the mobile terminal apparatus 10 and the base station apparatus 20, the shared channel signals are mapped in sub-carriers within the basic frequency blocks in such a manner frequency hopping is performed between different basic frequency blocks. Accordingly, the transmission bands of the shared channel signals can be separated from each other and therefore, better frequency diversity effects can be achieved and the reception quality of the shared channel signals transmitted on the uplink can be improved.

The present invention is not limited to the above-mentioned embodiment and may be embodied in various forms. For example, the processing part and the processing process may be modified as far as they do not depart from the scope of the present invention. Besides, the present invention may be modified without departing from the scope of the present invention.

## Claims

1. A mobile terminal apparatus which transmits a shared channel signal on uplink by using a predetermined number of basic frequency blocks out of a plurality of basic frequency blocks divided from a system band, each of the basic frequency blocks having a predetermined bandwidth, the mobile terminal apparatus comprising:
a receiving section for receiving, on downlink, control information for frequency hopping of the shared channel signal over different basic frequency blocks;
a mapping section for mapping the shared channel signal in sub-carriers in the different basic frequency blocks in such a manner that frequency hopping is performed over the basic frequency blocks in accordance with the control information; and
a transmitting section for radio-transmitting a transmission signal after mapping to a base station apparatus.

2. The mobile terminal apparatus of claim 1, wherein the mapping section maps the shared channel signal in the sub-carriers in the different basic frequency blocks in such a manner the frequency hopping is performed in the different basic frequency blocks in different sub-frames.

3. The mobile terminal apparatus of claim 2, wherein the mapping section maps the shared channel signal in the sub-carriers in the same basic frequency blocks in such a manner that the frequency hopping is performed over different bands of two or more section times contained in each of the sub-frames.

4. The mobile terminal apparatus of claim 1, wherein the mapping section maps the shared channel signal in the sub-carriers in the different basic frequency blocks in such a manner that the frequency hopping is performed over the basic frequency blocks in same sub-frames.

5. A mobile terminal apparatus which transmits a shared channel signal on uplink by using a predetermined number of basic frequency blocks out of a plurality of basic frequency blocks divided from a system band, each of the basic frequency blocks having a predetermined bandwidth, the mobile terminal apparatus comprising:
a receiving section for receiving, on downlink, control information for frequency hopping of the shared channel signal over different bands of two or more section times contained in each of sub-frames in the basic frequency blocks;
a mapping section for mapping the shared channel signal in sub-carriers in the basic frequency blocks in such a manner that frequency hopping is performed over the different bands in the basic frequency blocks in accordance with the control information; and
a transmitting section for radio-transmitting a transmission signal after mapping to a base station apparatus.

6. A base station apparatus for communicating with a mobile terminal apparatus that transmits a shared channel signal on uplink by using a predetermined number of basic frequency blocks out of a plurality of basic frequency blocks divided from a system band, each of the basic frequency blocks having a predetermined bandwidth, the base station apparatus comprising:
a mapping determining section for determining mapping of the shared channel signal in sub-carriers in the different basic frequency blocks in such a manner that the mobile terminal apparatus performs frequency hopping in the basic frequency blocks; and
a transmitting section for transmitting a control signal for the frequency hopping of the shared channel signal over the different basic frequency blocks in accordance with mapping details determined by the mapping determining section.

7. The base station apparatus of claim 6, wherein the mapping determining section determines mapping of the shared channel signal in the sub-carriers in the different basic frequency blocks in such a manner the frequency hopping is performed in the basic frequency blocks in different sub-frames.

8. The base station apparatus of claim 7, wherein the mapping determining section determines mapping of the shared channel signal in the sub-carriers in the same basic frequency blocks in such a manner the frequency hopping is performed over different bands of two or more section times contained in each of the sub-frames.

9. The base station apparatus of claim 6, wherein the mapping determining section determines mapping of the shared channel signal in the sub-carriers in the different basic frequency blocks in such a manner the frequency hopping is performed in the basic frequency blocks in same sub-frames.

10. A base station apparatus for communicating with a mobile terminal apparatus that transmits a shared channel signal on uplink by using a predetermined number of basic frequency blocks out of a plurality of basic frequency blocks divided from a system band, each of the basic frequency blocks having a predetermined bandwidth, the base station apparatus comprising:
a mapping determining section for determining mapping of the shared channel signal in sub-carriers in the basic frequency blocks in such a manner that the mobile terminal apparatus performs frequency hopping over different bands in the basic frequency blocks; and
a transmitting section for transmitting a control signal for the frequency hopping of the shared channel signal over the different basic frequency blocks in accordance with mapping details determined by the mapping determining section.

11. A base station apparatus that transmits a shared channel signal on downlink by using a predetermined number of basic frequency blocks out of a plurality of basic frequency blocks divided from a system band, each of the basic frequency blocks having a predetermined bandwidth, the base station apparatus comprising:
a mapping section for mapping the shared channel signal in sub-carriers in the different basic frequency blocks in such a manner that frequency hopping is performed over the basic frequency blocks; and
a transmitting section for radio-transmitting a transmission signal after mapping to a mobile terminal apparatus.

12. The base station apparatus of claim 11, wherein the mapping section maps the shared channel signal in the sub-carriers in the different basic frequency blocks in such a manner the frequency hopping is performed in the different basic frequency blocks in different sub-frames.

13. The base station apparatus of claim 12, wherein the mapping section maps the shared channel signal in the sub-carriers in the same basic frequency blocks in such a manner that the frequency hopping is performed over different bands of two or more section times contained in each of the sub-frames.

14. The base station apparatus of claim 11, wherein the mapping section maps the shared channel signal in the sub-carriers in the different basic frequency blocks in such a manner that the frequency hopping is performed over the basic frequency blocks in same sub-frames.

15. A base station apparatus that transmits a shared channel signal on downlink by using a predetermined number of basic frequency blocks out of a plurality of basic frequency blocks divided from a system band, each of the basic frequency blocks having a predetermined bandwidth, the base station apparatus comprising:
a mapping section for mapping the shared channel signal in sub-carriers in the basic frequency blocks in such a manner that frequency hopping is performed over different bands out of two or more section times contained in each of sub-frames in the basic frequency blocks; and
a transmitting section for radio-transmitting a transmission signal after mapping to a mobile terminal apparatus.

16. A mobile terminal apparatus that receives a shared channel signal on downlink by using a predetermined number of basic frequency blocks out of a plurality of basic frequency blocks divided from a system band, each of the basic frequency blocks having a predetermined bandwidth, the mobile terminal apparatus comprising:
a receiving section for receiving the shared channel signal that is mapped in sub-carriers in the different basic frequency blocks in such a manner that frequency hopping is performed over the basic frequency blocks; and
a demapping section for demapping the shared channel signal received by the receiving section.

17. The mobile terminal apparatus of claim 16, wherein the demapping section demaps the shared channel signal that is mapped in the sub-carriers in the different basic frequency blocks in such a manner the frequency hopping is performed in the different basic frequency blocks in different sub-frames.

18. The mobile terminal apparatus of claim 17, wherein the demapping section demaps the shared channel signal that is mapped in the sub-carriers in the same basic frequency blocks in such a manner that the frequency hopping is performed over different bands of two or more section times contained in each of the sub-frames.

19. The mobile terminal apparatus of claim 16, wherein the demapping section demaps the shared channel signal that is mapped in the sub-carriers in the different basic frequency blocks in such a manner that the frequency hopping is performed over the basic frequency blocks in same sub-frames.

20. A mobile terminal apparatus that receives a shared channel signal on downlink by using a predetermined number of basic frequency blocks out of a plurality of basic frequency blocks divided from a system band, each of the basic frequency blocks having a predetermined bandwidth, the mobile terminal apparatus comprising:
a receiving section for receiving the shared channel signal that is mapped in sub-carriers in the basic frequency blocks in such a manner that frequency hopping is performed over different bands out of two or more section times contained in each of sub-frames in the basic frequency blocks; and
a demapping section for demapping the shared channel signal received by the receiving section.

21. A method for transmitting a shared channel signal in a mobile terminal apparatus that transmits the shared channel signal on uplink by using a predetermined number of basic frequency blocks out of a plurality of basic frequency blocks divided from a system band, each of the basic frequency blocks having a predetermined bandwidth, the method comprising:
receiving, on downlink, control information for frequency hopping of the shared channel signal over different basic frequency blocks;
mapping the shared channel signal in sub-carriers in the different basic frequency blocks in such a manner that frequency hopping is performed over the basic frequency blocks in accordance with the control information; and
radio-transmitting a transmission signal after mapping to a base station apparatus.

22. A method for transmitting a shared channel signal in a mobile terminal apparatus that transmits the shared channel signal on uplink by using a predetermined number of basic frequency blocks out of a plurality of basic frequency blocks divided from a system band, each of the basic frequency blocks having a predetermined bandwidth, the method comprising:
receiving, on downlink, control information for frequency hopping of the shared channel signal over different bands of two or more section times contained in each of sub-frames in the basic frequency blocks;
mapping the shared channel signal in sub-carriers in the basic frequency blocks in such a manner that frequency hopping is performed over the different bands in the basic frequency blocks in accordance with the control information; and
radio-transmitting a transmission signal after mapping to a base station apparatus.

23. A method for transmitting a shared channel signal in a base station apparatus that transmits the shared channel signal on downlink by using a predetermined number of basic frequency blocks out of a plurality of basic frequency blocks divided from a system band, each of the basic frequency blocks having a predetermined bandwidth, the method comprising:
mapping the shared channel signal in sub-carriers in the different basic frequency blocks in such a manner that frequency hopping is performed over the basic frequency blocks; and
radio-transmitting a transmission signal after mapping to a mobile terminal apparatus.

24. A method for transmitting a shared channel signal in a base station apparatus that transmits the shared channel signal on downlink by using a predetermined number of basic frequency blocks out of a plurality of basic frequency blocks divided from a system band, each of the basic frequency blocks having a predetermined bandwidth, the method comprising:
mapping the shared channel signal in sub-carriers in the basic frequency blocks in such a manner that frequency hopping is performed over different bands out of two or more section times contained in each of sub-frames in the basic frequency blocks; and
radio-transmitting a transmission signal after mapping to a mobile terminal apparatus.
